# EUROPEAN PATENT SPECIFICATION

(11) **EP 2 650 535 B1**
(45) Date of publication and mention of the grant of the patent: **06.04.2016**
(21) Application number: 12163552.8
(22) Date of filing: 10.04.2012
(51) Int. Cl.: F03D 80/00, F03D 1/06

(54) **Rotor blade assembly for a wind turbine**
Rotorblattanordnung für eine Windturbine
Ensemble formant pale de rotor pour éolienne

(43) Date of publication of application: 16.10.2013
(73) Proprietor: Siemens Aktiengesellschaft, 80333 München (DE)
(72) Inventor: Lind, Soeren Oemann, 4700 Næstved (DK); Stege, Jason, 7330 Brande (DK)

(56) References cited:
- EP-A1- 2 395 239
- EP-A1- 2 416 005
- DE-A1-102008 007 910
- JP-A- 2005 113 735
- US-A1- 2011 110 789

## Description

The present invention relates to a rotor blade assembly for a wind turbine, the rotor blade assembly having a rotor blade comprising a first part of an integrated lightning down conductor of the rotor blade assembly, a rotor blade tip member being attachable or attached to the free ending of the rotor blade, the rotor blade tip member comprising a second part of the integrated lightning down conductor of the rotor blade assembly, a connection means adapted to connect or connecting the first and second part of the integrated lightning down conductor of the rotor blade assembly.

Respective rotor blade assemblies are generally known from prior art. Thereby, the provision of a lightning down conductor is necessary in order to encounter possible strikes of lightning, whereby a lightning is conducted by means of the lightning down conductor and usually a corresponding lightning down conductor of the remainder of the wind turbine construction supporting a respective rotor blade assembly to earth. A typical example of a respective rotor blade assembly is disclosed in WO 2005/031158 A2. Another example is disclosed in DE 10 2008007910 A1.

Thereby, both the connection means, particularly electrically, connecting the respective parts of the lightning down conductor of the rotor blade assembly disposed in the rotor blade and the rotor blade tip member as well as the respective parts of the lightning down conductor are regularly hard to access leading to disadvantages regarding installation, service or repair works.

Aside, the connection of the respective parts of the lightning down conductor provided by a respective connection means is oftentimes cumbersome and both in regard of its mechanical stability and electrically conducting properties not satisfying.

Hence, it is the object of the present invention to provide a rotor blade assembly with an improved connection means.

This is inventively achieved by a rotor blade assembly as initially specified which is characterised in that the connection means comprises a base element and two fastening elements which fastening elements parts are clamped or adapted to be clamped with the base element by means of at least one tension element.

The present invention provides an electrically conductive connection means essentially comprising a base element and two fastening elements which may detachably connected to the base element. The connection of the fastening elements and the base element is established by a tension element which, when tightened, provides a mechanical clamping force on the fastening elements so that they are clamped with the base element. When the fastening elements are clamped with the base element, a mechanical stable and electrically conducting connection is given, assuring that the electrical current induced by the lightning having stroked a part of the rotor blade assembly, i.e. particularly a respective lightning receptor provided with the rotor blade tip member, is properly conducted through the respective parts of the lightning down conductor.

Thereby, it is possible that only one single tension element is provided which assures a easily detachable connection of the fastening elements and the base element. However, it is also possible that each fastening element is attached to the base element by at least one separate tension element.

Furthermore, according to the invention, the base element has a cylindrical shape, with each face side of the base element being at least partially provided with an inclined ramp area, whereby each fastening element is provided with a corresponding inclined ramp area. Hence, when regarding respective axially cut views of the fastening elements and the base element, a respective fastening element essentially comprises a triangular shape, whereby the inclined or angled ramp areas of the fastening elements are geometrically adapted to the respective inclined or angled ramp areas of the base element, i.e. the respective inclined ramp areas of the fastening elements and the base element share the same or essentially the same inclination angles or slopes, respectively. In other words, the inclined ramp areas of the fastening elements correspond to the inclined ramp areas of the base element. Regarding the fastening elements it is to be noted that they are usually identically shaped components, i.e. have identical shapes. Hence, the connection means has an essentially consistent cylindrical shape when the fastening elements are attached to the base element, i.e. when the respective inclined ramp areas of the fastening elements abut the respective inclined ramp areas of the base element.

It is possible that the inclined ramp areas of the fastening elements are adapted to move along the respective ramp areas of the base element when the tension element is tightened. Hence, when tightening the tension element(s) the respective inclined ramp areas of the fastening elements move along the respective inclined ramp areas of the base element, so that a, particularly radial, dislocation or offset relative to the base element is provided when the tension element has been firmly tightened. Thereby, the motion and hence, the dislocation of the fastening elements is mainly dependent from the tightening force of the tension element. The respective radial dislocation assures a good contact of the connection means with respective parts of the lightning conductor, i.e. the first part of the lightning conductor disposed within the rotor blade and the second part of the lightning conductor disposed within the rotor blade tip member. Particularly, a large contact area between the respective fastening elements and the respective parts of the lightning conductor is provided ensuring a good electrical contact or connection.

According to a preferred embodiment of the invention, the tension element has a longitudinal shape, whereby the dimensions of the tension element are adapted to respective bores within the fastening elements and the base element in order to clamp the fastening elements with the base element. Hence, the respective bores within the fastening elements and the base element are adapted to build a passageway for the tension element when the connection means is assembled, i.e. when the respective inclined ramp areas of the fastening elements abut the corresponding inclined ramp areas of the base element. Preferably, the fastening elements and the base element each comprise a single through going bore.

Generally, the bores may be directly disposed within the axial centre of the connection means or may be disposed with a certain radial offset from the centre axis of the connection means. By a respective radial offset of the bores from the axial centre of the connection means, i.e. the respective axial centres of the fastening elements and the base element, the clamping force applied to the fastening elements as well as the base element may be may be varied.

The tension element may be a bolt or a screw, for instance. The dimensions of the tension element, i.e. preferably the bolt or the screw, are adapted to the dimensions of the bore within the connection means, i.e. the through going bore which is built when the fastening elements abut the base element as described before. The tension element may be provided with outer threads, the bores within the fastening elements and/or the base element may be provided with corresponding inner threads.

Preferably, both the rotor blade and the rotor blade tip member comprise block elements as parts of the respective lightning down conductor systems which are provided with recesses adapted to receive or receiving the connection means. Respective block elements are connected with the lightning conductor or form a part of it and essentially comprise two technically functions. First, they are ready to absorb large amounts of heat generated through the lightning striking the rotor blade assembly without melting, i.e. they are preferably built of a metal like stainless steel or aluminium, for instance. Second, they serve as a reception means for receiving the connection means. Therefore, recesses, i.e. particularly through bores or the like, are provided with the block elements. The dimensions of the through bores are usually adapted to the dimensions of the connection means. Hence, the connection means is

By providing respective block elements with both the rotor blade and the rotor blade tip member, the aforementioned possibility of absorbing heat generated through the stroke of lightning, the danger of damages originating from the stroke of lightning may be reduced.

In a further embodiment of the invention, the connection means is built of a metal, particularly an iron-based metal. Thereby, sufficient mechanical stability as well as good electrical and thermal conductivity of the connections means, i.e. preferably all components thereof, is given. It is favoured that all components of the connections means, i.e. the fastening elements, the base element, and the tension element, are built of the same material. Hence, the connection means has appropriate electrical and mechanical stability so that one or more lightning strokes do not cause any damage.

It is favoured that the rotor blade tip member comprises at least one lightning receptor electrically connected with the second part of the lightning down conductor. In such a manner, the rotor blade tip member may be understood as an elongated portion of the lightning down conductor being integrated in the rotor blade.

Regarding the rotor blade tip member, it is of advantage when it is shaped as a winglet. Thus, in dependence of the shape of the winglet, the aerodynamic properties of the blade tip member may be improved or adjusted.

Moreover, the invention relates to a wind turbine, particularly a direct drive wind turbine, having at least one rotor blade assembly as described above.

In the following the invention is described in detail as reference is made to the principle drawings, whereby
- Fig. 1: shows a cut-view of a rotor blade assembly according to an exemplary embodiment of the invention;
- Fig. 2: shows a perspective view of a connection means according to an exemplary embodiment of the invention;
- Fig. 3: shows a side view of a connection means according to an exemplary embodiment of the invention;
- Fig. 4: shows a side view of a connection means with radially dislocated fastening means according to an exemplary embodiment of the invention;
- Fig. 5: shows a base element of a connection means according to an exemplary embodiment of the invention;
- Fig. 6: shows two fastening elements of a connection means according to an exemplary embodiment of the invention; and
- Fig. 7: shows a top view of a connection means according to according to an exemplary embodiment of the invention.

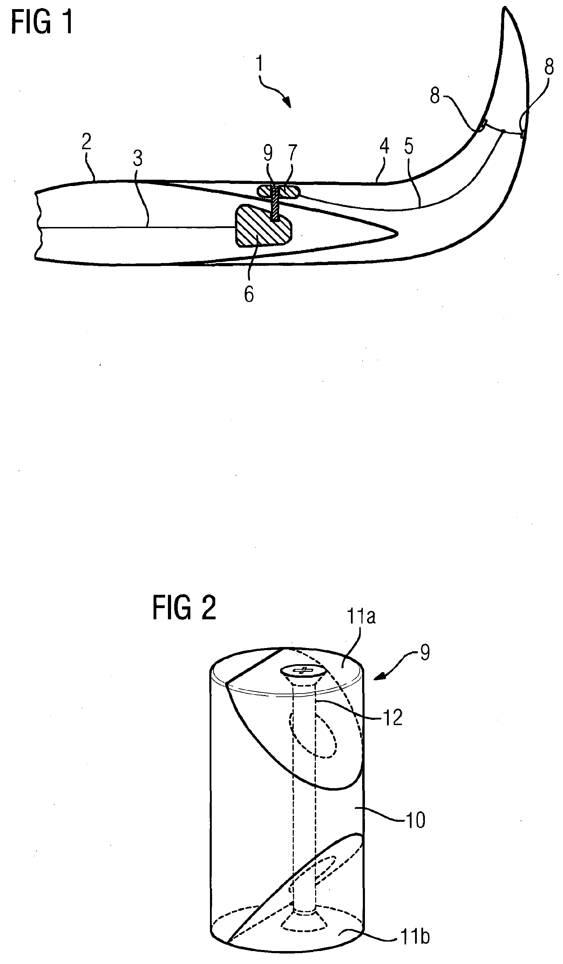

Fig. 1 shows a cut-view of a rotor blade assembly 1 according to an exemplary embodiment of the invention. The rotor blade assembly 1 is adapted to be connected with a wind turbine, i.e. a rotor hub of a wind turbine holding a number of respective rotor blade assemblies 1.

The rotor blade assembly 1 includes a rotor blade 2 comprising a first part 3 of an integrated lightning down conductor of the rotor blade assembly 1 and a rotor blade tip member 4 in the shape of an aerodynamically shaped winglet being attached to the free ending of the rotor blade 2, the rotor blade tip member comprising a second part 5 of the integrated lightning down conductor of the rotor blade assembly 1. The second part 5 of the lightning down conductor which is disposed in the rotor blade tip member 4 comprises a number of lightning receptors 8 which are electrically connected with the second part 5 of the lightning down conductor. The lightning down conductor of the rotor blade assembly 1 is or will be connected to further structures of the wind turbine so that electrical currents may be conducted to earth.

The respective first and second parts 3, 5 of the lightning down conductor end in block elements 6, 7, i.e. cast aluminium blocks, for instance. As is discernible from fig. 1, both the rotor blade 2 and the rotor blade tip member 4 are provided with a separate block element 6, 7 disposed in the region of their respective abutting end. Hence, the bock elements 6, 7 form part of, i.e. are integrated in the lightning conductor of the rotor blade assembly 1.

The respective block elements 6, 7 are provided with receiving sections in the shape of recesses or bores which receiving sections receive an electrically conductive connection means 9 connecting the first and second parts 3, 5 of the integrated lightning down conductor of the rotor blade assembly 1. The connection means 9 predominantly provides an electrical connection between the rotor blade 2 and the rotor blade tip member 4, i.e. the respective block elements 6, 7. Yet, the connection means 9 also provides a certain mechanical connection between the rotor blade 2 and the rotor blade tip member 4.

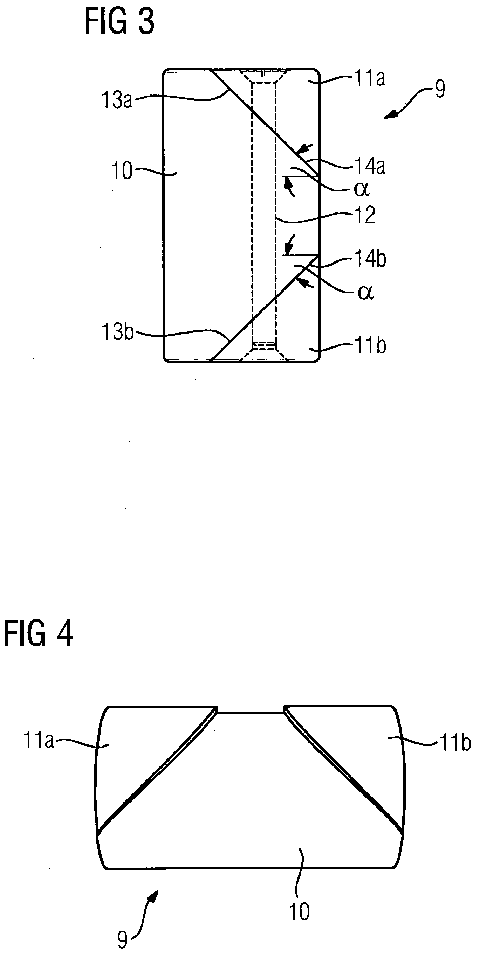

The connection means 9 and its components are depicted in the following fig. 2 - 6, whereby a perspective view of a connection means 9 according to an exemplary embodiment of the invention is shown in fig. 2 and a side view of a connection means 9 according to an exemplary embodiment of the invention is shown in fig. 3.

As is discernible from fig. 2, 3, the connection means 9 comprises a number of components, i.e. a base element 10, two cross-sectionally triangularly shaped fastening elements 11a, 11b, and a longitudinal tension element 12 in the shape of a bolt or a screw. The fastening elements 11a, 11b are detachably connected, i.e. clamped with the base element 10 by means of the tension element 12. Therefore, a trough-going bore 15 is provided with the base element 10 and respective through-going bores 16a, 16b are provided with the fastening elements 11a, 11b, whereby the tension element 12 penetrates through the bores 15, 16a, 16 when the connection means 9 is assembled.

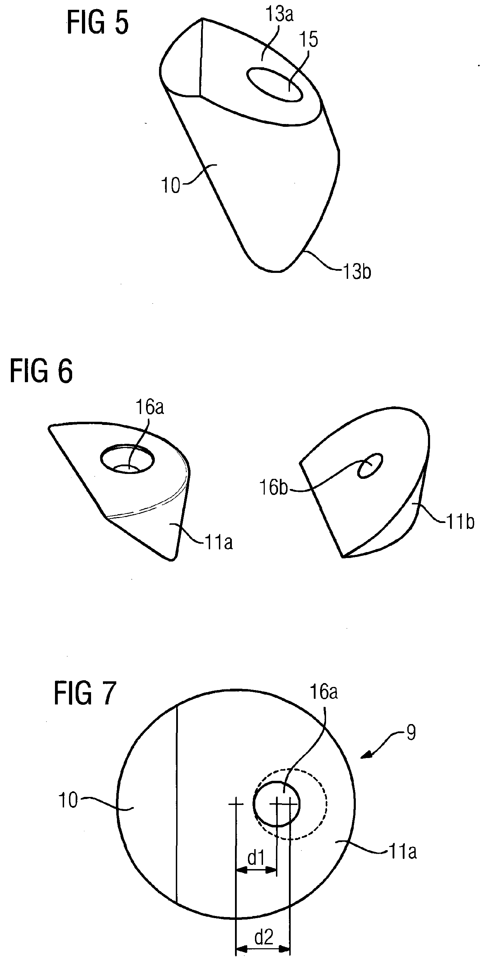

As is particularly discernible from fig. 7 showing a top view of a connection means 9 according to according to an exemplary embodiment of the invention, the bores 15, 16a, 16b are disposed with a certain radial offset d1, d2 from the centre axis of the connection means 9. The radial offset relates to the distance from the centre of the connection means 9 to the centre of the respective bores 15, 16a, 16b. Hence, the bores are eccentrically disposed with respective to the longitudinal centre axis of the connection means 9. Of course, the radial offset d1, d2 from the longitudinal axis of the connection means 9 is the same for the bores 16a, 16b provided with the fastening elements 11a, 11b and the bore 15 provided with the base element 10 so that a continuous passageway for receiving the tension element 12 is or may be built.

Thereby, the dimensions of the tension element 12 are adapted to the bores 15, 16a, 16b within the base element 10 and the fastening elements 11a, 11b, i.e. the bores 15, 16a, 16b and the tension element 12 essentially have the same diameter. Corresponding threads may be at least partially provided with the bores 15, 16a, 16b and the tension element 12 in order to strengthen the mechanical connection between the base element 10 and the fastening elements 11a, 11b.

The base element 10 has a cylindrical shape, whereby each face side (top and bottom end) of the base element 10 is provided with an inclined ramp area 13a, 13b (cf. also fig. 5). The fastening elements 11a, 11b are provided with corresponding inclined ramp areas 14a 14b (cf. also fig. 6), i.e. the inclination of the inclined ramp areas 13a, 13b of the base element 10 is the same as the inclination of the inclined ramp areas 14a, 14b of the fastening elements 11a, 11b (cf. inclination angles α shown in fig. 3). The inclination angles α are preferably acute angles and may be in the range of 20 - 70°, particularly in the range of 30 - 60°, especially 45°, for instance.

When firmly tightening the tension element 12, the inclined ramp areas 14a, 14b of the fastening elements 11a, 11b move along the respective ramp areas 13a, 13b of the base element 10, so that the outer sides of the fastening elements 11a, 11b extend about the outer side of the base element 10 (cf. fig. 4). Hence, the fastening elements 11a, 11b may be slightly radially dislocated with respect to the base element 10. The degree of radial dislocation is mainly dependent of the clamping force applied by the tension element 12. The dislocation of the fastening means 11a, 11b leads to a good electrical contact, i.e. a large contact area between the fastening elements 11a, 11b and the block elements 6, 7, i.e. the inner diameter of the recesses of the block elements 6, 7 receiving the connection means 9.

In order to withstand the high electrical currents generated when lightning strikes the rotor blade assembly 1, the connection means 9 is built of a metal, particularly an iron-based metal. Hence, the base element 10, the fastening elements 11a, 11b, as well as the tension element 12 are built of stainless steel and may also be surrounded by a layer of aluminium in order to decrease the chance of mechanical failure due to melting, i.e. particularly melting of sharp edges which are provided by threads or the like.

The concrete dimensions of the inventive connection means 9, i.e. the base element 10, the fastening means 11a, 11b, as well as the tension element 12 may differ and depend from a concrete application of the inventive rotor blade assembly 1.

All in all, the inventive principle provides an easy and fast to install detachable connection of the parts of a lightning conductor provided in a rotor blade 2 and a rotor blade tip member 4 of a respective rotor blade assembly 1 by means of the inventive connection means 9.

Although the present invention has been described in detail with reference to the preferred embodiment, the present invention is not limited by the disclosed examples from which the skilled person is able to derive other variations without departing from the scope of the invention.

## Claims

1. Rotor blade assembly (1) for a wind turbine, the rotor blade assembly (1) having
- a rotor blade (2) comprising a first part (3) of an integrated lightning down conductor of the rotor blade assembly (1),
- a rotor blade tip member (4) being attachable or attached to the free ending of the rotor blade (2), the rotor blade tip member (4) comprising a second part (5) of the integrated lightning down conductor of the rotor blade assembly (1);
- a connection means (9) adapted to connect or connecting the first and second part (3, 5) of the integrated lightning down conductor of the rotor blade assembly (1),
**characterised in that** the connection means (9) comprises a base element (10) and two fastening elements (11a, 11b) which fastening elements (11a, 11b) are clamped or adapted to be clamped with the base element (10) by means of at least one tension element (12), wherein the base element (10) has a cylindrical shape, with each face side of the base element (10) being at least partially provided with an inclined ramp area (13a, 13b), whereby each fastening element (11a, 11b) is provided with a corresponding inclined ramp area (14a, 14b).

2. Rotor blade assembly according to claim 1, wherein the inclined ramp areas (14a, 14b) of the fastening elements (11a, 11b) are adapted to move along the respective inclined ramp areas (14a, 14b) of the base element (10) when the tension element (12) is tightened.

3. Rotor blade assembly according to claim 1, wherein the tension element (12) has a longitudinal shape, whereby the dimensions of the tension element (12) are adapted to respective bores (15, 16a, 16b) within the fastening elements (11a, 11b) and the base element (10= in order to clamp the fastening elements (11a, 11b) with the base element (10).

4. Rotor blade assembly, wherein the bores (15, 16a 16b) are disposed with a certain radial offset (d1, d2) from the centre axis of the connection means (9).

5. Rotor blade assembly according to claim 3 or 4, wherein the tension element (12) is a bolt or a screw.

6. Rotor blade assembly according to one of the preceding claims, wherein both the rotor blade (2) and the rotor blade tip member (4) comprise block elements (6, 7) as parts of the lightning down conductor which are provided with recesses adapted to receive or receiving the connection means (9).

7. Rotor blade assembly according to one of the preceding claims, wherein the connection means (9) is built of a metal, particularly an iron-based metal.

8. Rotor blade assembly according to one of the preceding claims, wherein the rotor blade tip member (4) comprises at least one lightning receptor electrically connected with the second part (5) of the lightning down conductor.

9. Rotor blade assembly according to one of the preceding claims, wherein the rotor blade tip member (4) is shaped as a winglet.

10. Wind turbine, comprising at least one rotor blade assembly (1) according to one of the preceding claims.

## Patentansprüche

1. Rotorblattbaugruppe (1) für eine Windenergieanlage, wobei die Rotorblattbaugruppe (1) Folgendes aufweist:
- ein Rotorblatt (2) mit einem ersten Teil (3) eines integrierten Blitzableiters der Rotorblattbaugruppe (1),
- ein Rotorblattspitzenelement (4), das sich an dem freien Ende des Rotorblatts (2) anbringen lässt oder daran angebracht ist, wobei das Rotorblattspitzenelement (4) einen zweiten Teil (5) des integrierten Blitzableiters der Rotorblattbaugruppe (1) umfasst,
- ein Verbindungsmittel (9), das zum Verbinden des ersten und des zweiten Teils (3, 5) des integrierten Blitzableiters der Rotorblattbaugruppe (1) ausgelegt ist oder diese verbindet,
**dadurch gekennzeichnet, dass** das Verbindungsmittel (9) ein Grundelement (10) und zwei Befestigungselemente (11a, 11b) umfasst, die mit Hilfe mindestens eines Spannelements (12) am Grundelement (10) festgeklemmt oder für das Festklemmen daran ausgelegt sind, wobei das Grundelement (10) eine zylindrische Form aufweist, bei der jede Stirnseite des Grundelements (10) zumindest teilweise mit einer schrägen Rampenfläche (13a, 13b) versehen ist, wobei jedes Befestigungselement (11a, 11b) mit einer entsprechenden schrägen Rampenfläche (14a, 14b) versehen ist.

2. Rotorblattbaugruppe nach Anspruch 1, bei der die schrägen Rampenflächen (14a, 14b) der Befestigungselemente (11a, 11b) so ausgelegt sind, dass sie sich an den jeweiligen schrägen Rampenflächen (14a, 14b) des Grundelements (10) entlang bewegen, wenn das Spannelement (12) festgezogen wird.

3. Rotorblattbaugruppe nach Anspruch 1, bei der das Spannelement (12) eine längliche Form aufweist, wobei die Abmessungen des Spannelements (12) für jeweilige Bohrungen (15, 16a, 16b) in den Befestigungselementen (11a, 11b) und dem Grundelement (10= ausgelegt sind, so dass die Befestigungselemente (11a, 11b) an dem Grundelement (10) festgeklemmt werden.

4. Rotorblattbaugruppe, bei der die Bohrungen (15, 16a, 16b) mit einem bestimmten radialen Versatz (d1, d2) zur Mittelachse des Verbindungsmittels (9) angeordnet sind.

5. Rotorblattbaugruppe nach Anspruch 3 oder 4, bei der es sich bei dem Spannelement (12) um einen Bolzen oder eine Schraube handelt.

6. Rotorblattbaugruppe nach einem der vorhergehenden Ansprüche, bei der sowohl das Rotorblatt (2) als auch das Rotorblattspitzenelement (4) Blockelemente (6, 7) als Bestandteile des Blitzableiters umfasst, die mit Vertiefungen versehen sind, welche zum Aufnehmen des Verbindungsmittels (9) ausgelegt sind oder dieses aufnehmen.

7. Rotorblattbaugruppe nach einem der vorhergehenden Ansprüche, bei der das Verbindungsmittel (9) aus einem Metall, insbesondere einem auf Eisen basierenden Metall, besteht.

8. Rotorblattbaugruppe nach einem der vorhergehenden Ansprüche, bei dem das Rotorblattspitzenelement (4) mindestens einen Blitzrezeptor umfasst, der elektrisch mit dem zweiten Teil (5) des Blitzableiters verbunden ist.

9. Rotorblattbaugruppe nach einem der vorhergehenden Ansprüche, bei der das Rotorblattspitzenelement (4) als Winglet geformt ist.

10. Windenergieanlage mit mindestens einer Rotorblattbaugruppe (1) nach einem der vorhergehenden Ansprüche.

## Revendications

1. Ensemble (1) de pale de rotor pour une éolienne, l'ensemble (1) de pale de rotor ayant
- une pale (2) de rotor comprenant une première partie (3) d'un conducteur intégré de descente de foudre de l'ensemble (1) de pale de rotor,
- un élément (4) d'extrémité de pale de rotor pouvant être attaché ou étant attaché à l'extrémité libre de la pale (2) de rotor, l'élément (4) d'extrémité de pale de rotor comprenant une deuxième partie (5) du conducteur intégré de descente de foudre de l'ensemble (1) de pale de rotor,
- un moyen (9) de connexion adapté à connecter ou connectant les première et deuxième parties (3, 5) du conducteur intégré de descente de foudre de l'ensemble (1) de pale de rotor,
**caractérisé en ce que** le moyen (9) de connexion comprend un élément (10) de base et deux éléments (11a, 11b) de fixation, lesquels éléments (11a, 11b) de fixation sont bridés ou adaptés à être bridés avec l'élément (10) de base au moyen d'au moins un élément (12) de tension, dans lequel l'élément (10) de base a une forme cylindrique, avec chaque côté de face de l'élément (10) de base étant au moins partiellement prévu avec une zone de rampe inclinée (13a, 13b), dans lequel chaque élément (11a, 11b) de fixation est prévu avec une zone de rampe inclinée (14a, 14b) correspondante.

2. Ensemble de pale de rotor selon la revendication 1, dans lequel les zones de rampe inclinée (14a, 14b) des éléments (11a, 11b) de fixation sont adaptées à se déplacer le long des zones de rampe inclinée (14a, 14b) respectives de l'élément (10) de base lorsque l'élément (12) de tension est serré.

3. Ensemble de pale de rotor selon la revendication 1, dans lequel l'élément (12) de tension a une forme longitudinale, dans lequel les dimensions de l'élément (12) de tension sont adaptées à des alésages (15, 16a, 16b) respectifs au sein des éléments (11a, 11b) de fixation et de l'élément (10) de base afin de brider les éléments (11a, 11b) de fixation avec l'élément (10) de base.

4. Ensemble de pale de rotor, dans lequel les alésages (15, 16a, 16b) sont disposés avec un certain décalage radial (d1, d2) par rapport à l'axe central du moyen (9) de connexion.

5. Ensemble de pale de rotor selon la revendication 3 ou 4, dans lequel l'élément (12) de tension est un boulon ou une vis.

6. Ensemble de pale de rotor selon l'une des revendications précédentes, dans lequel la pale (2) de rotor et l'élément (4) d'extrémité de pale de rotor comprennent tous les deux des éléments (6, 7) de bloc comme des parties du conducteur de descente de foudre qui sont prévus avec des évidements adaptés à recevoir ou recevant le moyen (9) de connexion.

7. Ensemble de pale de rotor selon l'une des revendications précédentes, dans lequel le moyen (9) de connexion est constitué d'un métal, particulièrement un métal à base de fer.

8. Ensemble de pale de rotor selon l'une des revendications précédentes, dans lequel l'élément (4) d'extrémité de pale de rotor comprend au moins un récepteur de foudre électriquement connecté avec la deuxième partie (5) du conducteur de descente de foudre.

9. Ensemble de pale de rotor selon l'une des revendications précédentes, dans lequel l'élément (4) d'extrémité de pale de rotor est formé comme une ailette.

10. Éolienne, comprenant au moins un ensemble (1) de pale de rotor selon l'une des revendications précédentes.
